# EUROPEAN PATENT APPLICATION

(11) **EP 4 603 614 A1**
(43) Date of publication of application: **20.08.2025**
(21) Application number: 23894573.7
(22) Date of filing: 21.11.2023
(51) Int. Cl.: C22C 38/00, C21D 8/12, C21D 9/46, C22C 38/04, C22C 38/60, H01F 1/147

(54) **GRAIN-ORIENTED ELECTROMAGNETIC STEEL SHEET AND METHOD FOR MANUFACTURING SAME**

(30) Priority: 22.11.2022 JP 2022186528
(71) Applicant: JFE Steel Corporation, Tokyo 100-0011 (JP)
(72) Inventor: YAMADA, Takuya, Tokyo 100-0011 (JP); WATANABE, Makoto, Tokyo 100-0011 (JP); TERASHIMA, Takashi, Tokyo 100-0011 (JP)
(74) Representative: Grünecker Patent- und Rechtsanwälte PartG mbB
(86) International application number: PCT/JP2023/041721
(87) International publication number: WO 2024/111568

(57) **Abstract**

When producing a grain-oriented electrical steel sheet by hot-rolling a steel material with a given chemical composition, cold-rolling the hot-rolled steel sheet, performing decarburization annealing doubling as primary recrystallization annealing on the cold-rolled steel sheet, applying an annealing separator to the surface of the decarburization-annealed steel sheet, performing finishing annealing on the decarburization-annealed steel sheet, and then performing flattening annealing on the finishing-annealed steel sheet, a ceramic film is formed on the surface of the finishing-annealed steel sheet by electrodepositing a ceramic material thereon, preferably a ceramic material consisting of any one of a carbide, nitride, and oxide of one or more metal elements selected from the group consisting of Mg, Al, Si, Ti, Cr, Zr, and Y, or a ceramic material consisting of a complex of two or more of said carbide, nitride, and oxide, and preferably, a film tension of 5 to 40 MPa is imparted to the steel sheet, thereby obtaining a low-iron-loss grain-oriented electrical steel sheet having a film that exhibits an excellent uniformity and adhesiveness and is capable of imparting high tension to the steel sheet surface.

## Description

### Technical Field

The present invention relates to a grain-oriented electrical steel sheet and a method for producing the same; particularly, the invention relates to a grain-oriented electrical steel sheet with an extremely low iron loss and a method for producing the same.

### Background Art

A grain-oriented electrical steel sheet is a soft magnetic material that is mainly used in the cores of transformers and other devices, and it is strongly demanded that the magnetic property of such steel sheet should exhibit, particularly, a low iron loss. One method of reducing iron loss is to apply a film tension to the surface of the steel sheet. Here, such film tension refers to a tensile stress imparted to the steel sheet from a film formed on the surface thereof, which is incurred by a difference in thermal property between the steel sheet and the film. Specifically, this film tension is such that after forming a film with a thermal expansion coefficient lower than that of the steel sheet on the surface of the steel sheet at a high temperature, when cooled to room temperature, the film does not contract significantly while the steel sheet contracts, thereby causing a tensile stress to be applied to the steel sheet. Thus, forming a film with a thermal expansion coefficient lower than that of the steel sheet and a Young's modulus higher than that of the steel sheet makes it possible to increase the film tension applied to the surface of the steel sheet.

As a specific method for imparting a film tension, a common method is to apply a chemical solution consisting of phosphate and silica to the surface of the steel sheet after performing finishing annealing, and then form a film thereon by baking the solution thereto. For example, Patent Literature 1 proposes a method for forming a film consisting of aluminum phosphate and silica; and Patent Literature 2 proposes a method for forming a film consisting of magnesium phosphate and silica.

Further, other methods include the proposal of a technique focusing on the fact that a ceramic material, due to its low thermal expansion coefficient and high Young's modulus, is easy to be formed into a film that is favorable for imparting high tension. For example, Patent Literature 3 proposes a method for forming a ceramic film by vapor-depositing a ceramic material on the surface of the steel sheet via PVD or CVD; and Patent Literature 4 proposes a method where a sol is applied to the surface of the steel sheet via the sol-gel method, followed by baking the same thereto at a high temperature to form a ceramic film.

### Citation Lost

### Patent Literature

Patent Literature 1: JP-A-S53-028375
Patent Literature 2: JP-A-S56-052117
Patent Literature 3: JP-A-S63-054767
Patent Literature 4: JP-A-H02-243770

### Summary of Invention

### Technical Problem

However, the methods disclosed in Patent Literature 1 and Patent Literature 2 are such that while the film tension can be increased by increasing the thickness of the film, a decrease in space factor will be incurred in such a case, whereby there is actually a limit to the increase in film tension with these methods. Further, the method disclosed in Patent Literature 3 is such that the film deposition rate is slow, and pressure reduction is required when forming a film, which has led to a problem of deteriorated productivity and a higher production cost. In addition, the method disclosed in Patent Literature 4 is such that other than a slow film deposition rate, application and baking need to be performed repeatedly, which has also led to a problem of deteriorated productivity.

The present invention was made in view of the above problems caused by the conventional techniques. It is an object of the present invention to provide a low-iron-loss grain-oriented electrical steel sheet having a film that exhibits an excellent uniformity and adhesiveness and is capable of imparting high tension to a steel sheet surface, and to propose a method for producing a grain-oriented electrical steel sheet where the abovementioned film can be formed in a short period of time.

### Solution to Problem

In order to solve the above problems, the inventors of the present invention diligently conducted a series of studies focusing on a method for forming a film on the surface of a steel sheet that has been subjected to finishing annealing. As a result, the inventors were able to develop the present invention based on a finding that with a method of electrodepositing a ceramic material on the surface of a steel sheet, a film that exhibits an excellent uniformity and adhesiveness and is capable of imparting high tension can be formed in a short period of time, and a grain-oriented electrical steel sheet with an extremely low iron loss can thus be produced inexpensively and productively.

The present invention based on the above finding is a grain-oriented electrical steel sheet having, on its surface that has been subjected to finishing annealing, an electrodeposited ceramic film consisting of any one of a carbide, nitride, and oxide of one or more metal elements selected from the group consisting of Mg, Al, Si, Ti, Cr, Zr, and Y, or an electrodeposited ceramic film consisting of a complex of two or more of the carbide, nitride, and oxide.

The grain-oriented electrical steel sheet of the present invention is characterized in that a tensile stress imparted to the steel sheet by the electrodeposited ceramic film is in the range from 5 to 40 MPa.

Further, the grain-oriented electrical steel sheet of the present invention is characterized in that the steel sheet has no forsterite film.

Furthermore, the grain-oriented electrical steel sheet of the present invention is characterized in that the steel sheet has a chemical composition containing 0.0050 mass% or less of C, 2.0 to 5.0 mass% of Si, and 0.01 to 0.5 mass% of Mn, with a balance consisting of Fe and unavoidable impurities.

Furthermore, the grain-oriented electrical steel sheet of the present invention is characterized in that the chemical composition further contains, in addition to the chemical composition described above, at least one selected from the group consisting of 0.0001 to 0.005 mass% of B, 0.001 to 0.01 mass% of Ti, 0.005 to 0.1 mass% of P, 0.01 to 0.5 mass% of Cr, 0.01 to 1.5 mass% of Ni, 0.01 to 0.5 mass% of Cu, 0.002 to 0.08 mass% of Nb, 0.005 to 0.1 mass% of Mo, 0.005 to 0.5 mass% of Sn, 0.005 to 0.5 mass% of Sb, and 0.001 to 0.05 mass% of Bi.

In addition, the present invention proposes a method for producing a grain-oriented electrical steel sheet. This method is characterized by including:
hot-rolling a steel material with a given chemical composition to obtain a hot-rolled steel sheet;
cold-rolling the hot-rolled steel sheet to obtain a cold-rolled steel sheet;
performing decarburization annealing doubling as primary recrystallization annealing on the cold-rolled steel sheet to obtain a decarburization-annealed steel sheet;
applying an annealing separator to the surface of the decarburization-annealed steel sheet;
performing finishing annealing on the decarburization-annealed steel sheet to obtain a finishing-annealed steel sheet; and
performing flattening annealing on the finishing-annealed steel sheet,
wherein an electrodeposited ceramic film is formed on the surface of the finishing-annealed steel sheet by electrodepositing thereon a ceramic material consisting of any of a carbide, nitride, and oxide of one or more metal elements selected from the group consisting of Mg, Al, Si, Ti, Cr, Zr, and Y, or a ceramic material consisting of a complex of two or more of the carbide, nitride, and oxide.

Further, the method of the present invention for producing a grain-oriented electrical steel sheet is characterized in that a tensile stress imparted to the steel sheet by the electrodeposited ceramic film is in the range from 5 to 40 MPa.

Furthermore, the method of the present invention for producing a grain-oriented electrical steel sheet is characterized in that the ceramic material is to be electrodeposited on a finishing-annealed steel sheet surface having no forsterite film.

Furthermore, the steel material used in the method of the present invention for producing a grain-oriented electrical steel sheet is characterized by having a chemical composition containing 0.01 to 0.1 mass% of C, 2.0 to 5.0 mass% of Si, 0.01 to 0.5 mass% of Mn, and at least one group of inhibitor-forming components selected from the following groups A and B, with a balance consisting of Fe and unavoidable impurities:
·group A: at least one selected from the group consisting of 0.005 to 0.03 mass% of S and 0.005 to 0.03 mass% of Se;
·group B: 0.010 to 0.04 mass% of Al and 0.005 to 0.01 mass% of N.

Furthermore, the steel material used in the method of the present invention for producing a grain-oriented electrical steel sheet is characterized by having a chemical composition containing 0.01 to 0.1 mass% of C, 2.0 to 5.0 mass% of Si, 0.01 to 0.5 mass% of Mn, less than 0.005 mass% of S, less than 0.005 mass% of Se, less than 0.010 mass% of Al, and less than 0.005 mass% of N, with a balance consisting of Fe and unavoidable impurities.

Furthermore, the steel material used in the method of the present invention for producing a grain-oriented electrical steel sheet is characterized in that the chemical composition of the steel material further contains at least one selected from the group consisting of 0.0001 to 0.005 mass% of B, 0.001 to 0.01 mass% of Ti, 0.005 to 0.1 mass% of P, 0.01 to 0.5 mass% of Cr, 0.01 to 1.5 mass% of Ni, 0.01 to 0.5 mass% of Cu, 0.002 to 0.08 mass% of Nb, 0.005 to 0.1 mass% of Mo, 0.005 to 0.5 mass% of Sn, 0.005 to 0.5 mass% of Sb, and 0.001 to 0.05 mass% of Bi.

### Advantageous Effects of Invention

According to the present invention, by electrodepositing a ceramic material on the surface of a steel sheet subjected to finishing annealing, a film that exhibits excellent uniformity and adhesiveness and is capable of imparting high tension can be formed in a short period of time, and a grain-oriented electrical steel sheet with an extremely low iron loss can thus be produced inexpensively and productively.

### Description of Embodiment

In the beginning, described is an experiment acting as a trigger for developing the present invention.

A hot-rolled sheet was obtained by hot-rolling a steel material having a chemical composition containing 0.07 mass% of C, 3.4 mass% of Si, 0.07 mass% of Mn, 0.002 mass% of S, 0.023 mass% of Al, and 0.008 mass% of N, with a balance consisting of Fe and unavoidable impurities. After performing hot strip annealing on the hot-rolled sheet, the sheet was subjected to cold rolling twice with intermediate annealing being performed therebetween to form a cold-rolled sheet with a final sheet thickness of 0.23 mm. The cold-rolled sheet was then subjected to decarburization annealing, which doubled as primary recrystallization annealing, followed by applying an annealing separator mainly composed of MgO to the surface of the steel sheet, and then to finishing annealing to form a finishing-annealed sheet with a forsterite film.

Next, an electrodeposited film of silica (SiO₂) was formed on the surface of the finishing-annealed steel sheet in a 10 mass% sodium orthosilicate solution under various conditions shown in Table 1.

The steel sheet thus formed was then subjected to flattening annealing at 850°C for 60 seconds, followed by baking a film thereto. Test specimens were taken from the steel sheet to evaluate its film properties (film thickness, uniformity, adhesiveness, and film tension) and magnetic properties (magnetic flux density B₈, iron loss W_{17/50}). Here, the thickness of the film was measured by observing the cross-section surface of the film via the SEM. Further, as for the uniformity of the film, the surface of the steel sheet was visually observed, in which "∘" was given to examples where the film was uniform, "Δ" was given to examples where the film was slightly non-uniform, and "×" was given to examples where the film was non-uniform. Moreover, as for the adhesiveness of the film, the steel sheet was wound around round bars with various diameters, and the adhesiveness of the film was evaluated in terms of the smallest diameter at which the film did not strip (hereinafter referred to as "bend and stripping diameter"). **In** addition, as for film tension, a camber amount of the steel sheet was measured after removing the film on one side thereof, and the film tension of the film was calculated based on the following formula (1): Film tension (MPa) = Young's modulus of steel sheet (GPa) × sheet thickness of steel sheet (mm) × camber amount of steel sheet (mm) ÷ (length of steel sheet (mm))2 × 103wherein a value of 132 GPa was used as the Young's modulus of the above steel sheet.

Further, the magnetic properties were measured in accordance with JIS C 2556 (1996).

**[Table 1]**

| Condition | Film forming method | Electrodeposition condition | | Film properties | | | | Magnetic properties | | Remarks |
|---|---|---|---|---|---|---|---|---|---|---|
| | | Current density (A/dm²) | Electrodeposition time (s) | Film thickness (µm) | Evaluation on film appearance* | Bend and stripping diameter (mm) | Film tension (MPa) | Magnetic flux density B₈ (T) | **Iron loss** W_{17/50} (W/kg) | |
| 1 | Electrodeposition | 2 | 20 | 0.62 | ○ | 20 | 3.95 | 1.918 | 0.805 | Comparative Example |
| 2 | Electrodeposition | 2 | 30 | 0.86 | ○ | 20 | 5.45 | 1.920 | 0.753 | Invention Example |
| 3 | Electrodeposition | 2 | 60 | 1.76 | ○ | 20 | 11.08 | 1.924 | 0.723 | Invention Example |
| 4 | Electrodeposition | 4 | 20 | 1.20 | ○ | 20 | 7.55 | 1.921 | 0.743 | Invention Example |
| 5 | Electrodeposition | 4 | 30 | 1.75 | ○ | 20 | 10.96 | 1.921 | 0.731 | Invention Example |
| 6 | Electrodeposition | 4 | 60 | 3.46 | ○ | 20 | 21.69 | 1.923 | 0.699 | Invention Example |
| 7 | Electrodeposition | 8 | 20 | 2.32 | ○ | 20 | 14.63 | 1.924 | 0.713 | Invention Example |
| 8 | Electrodeposition | 8 | 30 | 3.41 | ○ | 20 | 21.35 | 1.924 | 0.698 | Invention Example |
| 9 | Electrodeposition | 8 | 40 | 3.98 | ○ | 20 | 25.30 | 1.925 | 0.697 | Invention Example |
| 10 | Electrodeposition | 8 | 45 | 5.12 | ○ | 20 | 31.50 | 1.924 | 0.692 | Invention Example |
| 11 | Electrodeposition | 8 | 50 | 6.01 | ○ | 25 | 36.50 | 1.923 | 0.682 | Invention Example |
| 12 | Electrodeposition | 8 | 60 | 6.82 | × | 40 | 42.76 | 1.914 | 0.804 | Comparative Example |

| | | | | | | | | | | |
|---|---|---|---|---|---|---|---|---|---|---|
| *) Based on visual observation, examples exhibiting uniformity were given ∘, examples exhibiting slight non-uniformity were given Δ, and examples exhibiting non-uniformity were given ×. | | | | | | | | | | |

The above measurement results are also listed in Table 1. As shown in Table 1, increasing the current density and electrodeposition time resulted in an increase in both the thickness of the film and the film tension, while the iron loss decreased. However, when the film was too thin and thus the film tension was extremely low, the iron loss-reducing effect was insufficient. Conversely, when the film was too thick and the tension was too high, the adhesiveness and iron loss rather deteriorated. These results indicate that a method for forming a film on the surface of a steel sheet by electrodepositing silica thereon is not only superior in terms of productivity but is also significantly effective in improving the film properties and magnetic properties.

In addition, even with regard to ceramic material other than silica (SiO₂), which was described above, the inventors conducted experiments where electrodeposited films were formed in a manner similar to that described above and the effects thereof were examined. As a result, similar effects were observed with the electrodeposited ceramic film consisting of any one of a carbide, nitride, and oxide of one or more metal elements selected from the group consisting of Mg, Al, Si, Ti, Cr, Zr, and Y, or with the electrodeposited ceramic film consisting of a complex of two or more of the carbide, nitride, and oxide. The present invention was developed based on such new findings.

Next, the chemical composition of the steel material (slab) used to produce the grain-oriented electrical steel sheet of the present invention is described.

### C: 0.01 to 0.1 mass%

C is an effective component for enhancing the primary recrystallization texture; this effect cannot be achieved sufficiently if the C content is less than 0.01 mass%. Meanwhile, if the C content is more than 0.1 mass%, it is difficult to achieve decarburization by decarburization annealing to a level where magnetic aging is not caused. Thus, the C content should be in the range from 0.01 to 0.1 mass%, preferably in the range from 0.02 to 0.08 mass%.

### Si: 2.0 to 5.0 mass%

Si is an effective component for enhancing the magnetic properties of steel by increasing its specific resistance. This effect cannot be achieved sufficiently when the Si content is less than 2.0 mass%. Meanwhile, when the Si content exceeds 5.0 mass%, it is difficult to perform cold rolling because steel is hardened and embrittled. Thus, the Si content should be in the range from 2.0 to 5.0 mass%, preferably in the range from 2.5 to 4.5 mass%.

### Mn: 0.01 to 0.5 mass%

As with Si, Mn improves the magnetic properties of steel by increasing its specific resistance. Further, Mn is also effective in improving the hot rollability of steel. However, when the Mn content is less than 0.01 mass%, these benefits cannot be sufficiently realized. Meanwhile, when the Mn content exceeds 0.5 mass%, magnetic properties will deteriorate due to the induction of γ transformation after secondary recrystallization. Therefore, the Mn content should be in the range from 0.01 to 0.5 mass%, preferably in the range from 0.01 to 0.2 mass%.

Further, the steel material (slab) used to produce the grain-oriented electrical steel sheet according to the present invention includes different components other than the above essential ones depending on whether secondary recrystallization is caused by using an inhibitor such as MnS, MnSe, and AlN or without using such an inhibitor.

For example, when using MnS and/or MnSe as an inhibitor for the expression of secondary recrystallization, the steel material preferably contains at least one selected from the group consisting of 0.005 to 0.03 mass% of S and 0.005 to 0.03 mass% of Se, in addition to Mn. Further, when AlN is used as an inhibitor, the steel material should contain 0.010 to 0.04 mass% of Al and 0.005 to 0.01 mass% of N. It should be noted that the above inhibitor may be used alone, or two or more inhibitors may be used in combination.

Meanwhile, when using no inhibitor to cause secondary recrystallization, the above inhibitor-forming components are preferably reduced as much as possible. Specifically, the S content should be less than 0.005 mass%, the Se content should be less than 0.005 mass%, the Al content should be less than 0.010 mass%, and the N content should be less than 0.005 mass%.

The steel material used in the present invention includes, in addition to the components described above, a balance substantially consisting of Fe and unavoidable impurities. However, for the purpose of enhancing the magnetic properties of steel, the steel material may further contain, in addition to the components described above, at least one selected from the group consisting of 0.0001 to 0.005 mass% of B, 0.001 to 0.01 mass% of Ti, 0.005 to 0.1 mass% of P, 0.01 to 0.5 mass% of Cr, 0.01 to 1.5 mass% of Ni, 0.01 to 0.5 mass% of Cu, 0.002 to 0.08 mass% of Nb, 0.005 to 0.1 mass% of Mo, 0.005 to 0.5 mass% of Sn, 0.005 to 0.5 mass% of Sb, and 0.001 to 0.05 mass% of Bi.

Next, a method for producing the grain-oriented electrical steel sheet of the present invention is described.

A steel with a chemical composition conforming to the above composition of the present invention is first produced by a commonly known refining process, followed by producing a steel material (slab) via a commonly known ingot making-blooming method or continuous casting method. Here, a thin cast slab of 100 mm or less may be produced by a direct casting method.

The slab is then reheated to a given temperature and hot-rolled into a hot-rolled sheet. Here, when the slab contains no inhibitor-forming component, it may be directly hot-rolled after continuous casting without reheating.

Next, the hot-rolled sheet is subjected to hot strip annealing, as required. The annealing temperature of the hot strip annealing, when conducted, should be in the range from 800 to 1,150°C. An annealing temperature of lower than 800°C may result in an insufficient effect of hot strip annealing, because the band texture formed by hot rolling will remain such that a primary recrystallization texture with uniform grains cannot be achieved, thus hindering the growth of secondary recrystallized grains. Meanwhile, an annealing temperature higher than 1,150°C will result in excessively large grain sizes after hot strip annealing, making it difficult to achieve a primary recrystallization texture with uniform grains.

The hot-rolled sheet obtained after the hot rolling or hot strip annealing is then descaled by pickling or the like, followed by cold rolling either once or twice or more with intermediate annealing being performed therebetween, thereby forming a cold-rolled sheet with a final sheet thickness. It should be noted that when intermediate annealing is performed, the annealing temperature is preferably in the range from 900 to 1,200°C. An annealing temperature of lower than 900°C may result in deteriorated magnetic properties, because the Goss nuclei in the primary recrystallization texture decrease due to excessively small grain sizes after performing intermediate annealing. Meanwhile, an annealing temperature of higher than 1,200°C results in excessively large grain sizes after performing intermediate annealing, which makes it difficult to achieve a primary recrystallization texture with uniform grains.

Next, the cold-rolled sheet with the final sheet thickness is subjected to decarburization annealing doubling as primary recrystallization annealing. It should be noted that the heating rate in the range from 500 to 700°C during the heating process of the decarburization annealing is preferably 50°C/s or higher. **In** this way, the number of the Goss nuclei in the primary recrystallization texture will increase such that the magnetic properties can be improved. Further, the temperature for decarburization annealing is preferably in the range from 750 to 950°C. A temperature lower than 750°C will make decarburization itself difficult. Meanwhile, a temperature higher than 950°C may hinder secondary recrystallization due to excessively large grain sizes of the primary recrystallized grains. Further, the atmosphere employed when performing decarburization annealing is preferably such that an oxygen potential P_{H20}/P_{H2} is in the range from 0.3 to 0.6. When P_{H20}/P_{H2} is less than 0.3, decarburization is difficult. Meanwhile, when P_{H20}/P_{H2} is more than 0.6, the film properties may deteriorate as FeO is excessively generated on the surface of the steel sheet. By performing decarburization annealing in the above manner, the C content in the steel can be reduced to 0.0050 mass% or less at which magnetic aging does not occur.

Next, the annealing separator is applied to the surface of the steel sheet subjected to the above decarburization annealing, followed by performing finishing annealing involving secondary recrystallization and purification. It should be noted that, to cause secondary recrystallization during the heating in the finishing annealing, it is preferable to heat the steel sheet at a heating rate of 2 to 50°C/s in the temperature range from 700 to 1,100°C. Meanwhile, to cause secondary recrystallization by holding the steel sheet at a constant temperature, the steel sheet is preferably held at any temperature of 700 to 1,100°C for 25 hours or more. Further, the purification is preferably carried out by holding the steel sheet at a temperature of 1,120 to 1,250°C for 2 to 50 hours under a H₂-containing atmosphere. Insufficient purification will result if the temperature for the purification is lower than 1,120°C and/or the steel sheet is held for a time period of less than 2 hours. Meanwhile, if the temperature for the purification is higher than 1,250°C and/or the steel sheet is held for a time period of more than 50 hours, the shape of the steel sheet may deteriorate as the coil undergoes buckling distortion. By performing the above purification, the inhibitor-forming components added in the steel material can be reduced to the level of unavoidable impurities.

Here, it is crucial in the present invention to form a ceramic film on the surface of a steel sheet subjected to finishing annealing, by electrodepositing a ceramic material on the surface of such steel sheet. The ceramic material to be electrodeposited is required to consist of any one of a carbide, nitride, and oxide of one or more metal elements selected from the group consisting of Mg, Al, Si, Ti, Cr, Zr, and Y, or a complex of two or more of such carbide, nitride, and oxide. The ceramic material has low thermal expansion coefficients and high Young's moduli, which is advantageous in terms of forming a film capable of imparting a high tensile stress to the steel sheet.

Further, the film tension imparted to the steel sheet by the ceramic film should be in the range from 5 to 40 MPa. When the film tension is less than 5 MPa, the iron loss-reducing effect by the film tension cannot be sufficiently achieved. Meanwhile, a film tension of more than 40 MPa will result in poor adhesiveness of the film due to excessive stress occurring at the interface between the steel sheet and the film. It is preferably in the range from 10 to 35 MPa.

Further, the thickness of the ceramic film is not specified as long as it is in the range that can achieve the film tension described above. However, the upper limit of the film thickness should be 5 µm, because a film thickness more than 5 µm will result in impaired magnetic properties of a transformer due to a reduced space factor. Preferably, the film thickness should be 3 µm or less.

Further, in order to further reduce iron loss by further enhancing the effect of the ceramic film, it is preferred that a ceramic material be electrodeposited on the surface of a steel sheet that has been subjected to finishing annealing, preferably on the surface of a steel sheet that has been mirror-finished by removing a vitreous film such as forsterite from the surface of the steel sheet. There are no particular restrictions on a method for performing the mirror finishing. For example, there may be used a method of chemically or physically removing the forsterite film, a method of stripping the forsterite film by adding chloride to the annealing separator, or a method of preventing the formation of the forsterite film by applying an annealing separator mainly composed of Al₂O₃ or the like.

Further, there are no particular restrictions on a method for electrodepositing the ceramic material; for example, when electrodepositing silica (SiO₂), it may be electrodeposited in a solution containing silicate ions, or electrodeposited by electrophoretic deposition in a solution in which silica particles are dispersed. Further, when performing electrophoretic deposition, the dispersion medium may be water, an organic solvent, or a mixture thereof. Moreover, electrodeposition may also be performed while applying a tension force to the steel sheet. The same applies to other ceramic materials.

Further, electrodeposition is a method favorable for forming a film, because the thickness of the film can be easily increased by increasing current density, voltage, and electrodeposition time. The preferable conditions for electrodeposition vary depending on the type of the ceramic material; however, in terms of improving productivity, it is preferable to increase the current density and voltage and reduce the electrodeposition time.

Further, there are no specific restrictions on the method for electrodeposition. For example, an indirect current application method may be used in which an anode and a cathode are alternately arranged in a non-contact manner along the sheet threading direction; or a direct current application method may be used with a conducting roll.

The steel sheet with the ceramic material electrodeposited thereon is then subjected to flattening annealing for shape correction to bake the ceramic material to form a ceramic film. However, the baking of the film may also be performed at a location other than the flattening annealing equipment. Here, the annealing temperature should be in the range from 800 to 1,000°C. An annealing temperature lower than 800°C often results in insufficient flattening and may also result in insufficient adhesiveness of the ceramic film. Meanwhile, an annealing temperature higher than 1,000°C may cause creep deformation, resulting in deterioration of magnetic properties.

The steel sheet which has undergone the flattening annealing is then subjected to a magnetic domain subdividing treatment, if necessary, to form a product sheet. Further, a commonly known insulation coating may also be formed on the ceramic film, if necessary. However, since the space factor decreases as the film thickness increases, it is preferred that the total film thickness, including the thickness of the ceramic film, be in the above film thickness range (5 µm or less).

### Examples

### Example 1

A steel material (slab) with a chemical composition containing 0.03 mass% of C, 3.4 mass% of Si, 0.07 mass% of Mn, and 0.003 mass% of S, with a balance consisting of Fe and unavoidable impurities was hot rolled to form a hot-rolled sheet, followed by hot strip annealing thereon. The steel sheet subjected to the hot strip annealing was then cold rolled to form a cold-rolled sheet with a final sheet thickness of 0.23 mm. The cold-rolled sheet was then subjected to decarburization annealing doubling as primary recrystallization annealing, followed by applying an annealing separator mainly composed of MgO on the surface of the steel sheet and then performing finishing annealing thereon. Subsequently, a forsterite film was removed by pickling with hydrochloric acid, followed by chemical polishing with hydrofluoric acid so as to mirror-finish the steel sheet. Next, electrophoretic deposition was performed in a mixed solution of water and ethanol in which any of the various ceramic materials shown in Table 2 was dispersed, followed by baking during flattening annealing under a condition of 850°C for 60 seconds, thereby producing a product sheet.

A test specimen was taken from the resulting product sheet to evaluate its film properties (film thickness, uniformity, adhesiveness, and film tension) and magnetic properties (magnetic flux density B₈, iron loss W_{17/50}). Here, the properties of the ceramic film were evaluated by the methods described in the above experiment. Further, the magnetic properties were measured in accordance with JIS C 2556 (1996).

**[Table 2]**

| Condition | Electrodeposition condition | | | Film properties | | | | Magnetic properties | | Remarks |
|---|---|---|---|---|---|---|---|---|---|---|
| | Type of ceramic film | Voltage (V) | Electrodepositi on time (s) | Film thickness (µm) | Evaluation on film appearance* | Bend and stripping diameter (mm) | Film tension (MPa) | Magnetic flux density B₈ (T) | **Iron** loss W_{17/50} (W/kg) | |
| 1 | Al₂O₃ | 3 | 60 | 1.08 | ○ | 20 | 18.91 | 1.942 | 0.605 | Invention Example |
| 2 | SiC | 2 | 60 | 0.91 | ○ | 20 | 26.35 | 1.944 | 0.579 | Invention Example |
| 3 | Si₃N₄ | 2 | 60 | 0.88 | ○ | 20 | 18.76 | 1.940 | 0.606 | Invention Example |
| 4 | TiC | 5 | 30 | 0.72 | ○ | 20 | 12.66 | 1.949 | 0.631 | Invention Example |
| 5 | TiN | 3 | 30 | 0.39 | ○ | 20 | 6.20 | 1.946 | 0.667 | Invention Example |
| 6 | CrN | 2 | 30 | 0.23 | ○ | 20 | 7.37 | 1.941 | 0.660 | Invention Example |
| 7 | ZrC | 3 | 30 | 0.29 | ○ | 20 | 5.21 | 1.943 | 0.674 | Invention Example |
| 8 | Y₂O₃ | 3 | 60 | 0.86 | ○ | 20 | 5.97 | 1.945 | 0.669 | Invention Example |
| 9 | 2Al₂O₃·2SiO₂ | 3 | 60 | 1.32 | ○ | 20 | 16.59 | 1.942 | 0.614 | Invention Example |
| 10 | 2MgO·2Al₂O₃·5SiO₂ | 5 | 30 | 1.30 | ○ | 20 | 17.57 | 1.940 | 0.610 | Invention Example |
| 11 | ZrC·TiN | 3 | 60 | 1.02 | ○ | 20 | 19.55 | 1.941 | 0.607 | Invention Example |
| 12 | Al₂O₃·CrN | 3 | 60 | 0.96 | ○ | 20 | 17.87 | 1.943 | 0.609 | Invention Example |
| 13 | SiO₂·TiC | 3 | 60 | 0.99 | ○ | 20 | 18.55 | 1.944 | 0.608 | Invention Example |

| | | | | | | | | | | |
|---|---|---|---|---|---|---|---|---|---|---|
| *: Based on visual observation, examples exhibiting uniformity were given ∘, examples exhibiting slight non-uniformity were given Δ, and examples exhibiting non-uniformity were given ×. | | | | | | | | | | |

The results of the above evaluations are also shown in Table 2. As seen from Table 2, by electrodepositing a ceramic material on the surface of a steel sheet that has undergone finishing annealing under the conditions of the present invention, a ceramic film that has excellent uniformity and adhesiveness and is capable of imparting high tension can be formed in a short period of time, thereby making it possible to produce a grain-oriented electrical steel sheet with an extremely low iron loss inexpensively and productively.

### Example 2

A steel material (slab) with a chemical composition containing various components shown in Table 3 and a balance consisting of Fe and unavoidable impurities was subjected to hot rolling to produce a hot-rolled sheet. The hot-rolled sheet was subjected to hot strip annealing and then cold rolling to produce a cold-rolled sheet with a final sheet thickness of 0.23 mm. This cold-rolled sheet was subjected to decarburization annealing doubling as primary recrystallization annealing, followed by applying an annealing separator composed mainly of MgO and containing antimony chloride to the surface of the resulting steel sheet and then performing finishing annealing thereon so as to obtain a finishing-annealed sheet having no forsterite film. Next, a ceramic film was electrodeposited on the finishing-annealed sheet under a condition of 5V for 40 seconds via electrophoretic deposition in a mixed solution of water and ethanol in which alumina (Al₂O₃) was dispersed. The ceramic film was then subjected to flattening annealing involving baking under a condition of 850°C for 60 seconds, to form a product sheet.

A test specimen was taken from the resulting product sheet to evaluate its film properties (film thickness, uniformity, adhesiveness, and film tension) and magnetic properties (magnetic flux density B₈, iron loss W_{17/50}). Here, the properties of the ceramic film were evaluated by the methods described in the above experiment. Further, the magnetic properties were measured in accordance with JIS C 2556 (1996).

**[Table 3]**

| Nº | Chemical composition (mass%) | | | | Film properties | | | | Magnetic properties | | Remarks |
|---|---|---|---|---|---|---|---|---|---|---|---|
| | C | Si | Mn | Others | Film thickness (µm) | Evaluation on film appearance(*) | Bend and stripping diameter (mm) | Tension (MPa) | Magnetic flux density B₈ (T) | Iron lossW_{17/50} (W/kg) | |
| 1 | 0.06 | 2.9 | 0.08 | N=0.007,Al=0.01,S=0.005,B=0.0001, Cu=0.08,Sn=0.03 | 1.15 | ○ | 20 | 20.13 | 1.943 | 0.600 | Invention Example |
| 2 | 0.07 | 3.3 | 0.06 | N=0.004,A1=0.007,5=0.004,Nb=0.05, Sb=0.01,Bi=0.003 | 1.24 | ○ | 20 | 21.71 | 1.944 | 0.595 | Invention Example |
| 3 | 0.05 | 2.8 | 0.09 | N=0.004,A1=0.006,5=0.003,Se=0.002, P=0.01,Ti=0.002,Cr=0.05 | 1.14 | ○ | 20 | 19.96 | 1.941 | 0.601 | Invention Example |
| 4 | 0.06 | 3.3 | 0.07 | S=0.004,Se=0.001,B=0.0001,Ti=0.002, Ni=0.04,Nb=0.04 | 1.17 | ○ | 20 | 20.48 | 1.941 | 0.599 | Invention Example |
| 5 | 0.05 | 3.2 | 0.06 | N=0.008,A1=0.02,5=0.005,Se=0.01, B=0.0004,Cu=0.06,Sn=0.01 | 1.22 | ○ | 20 | 21.36 | 1.942 | 0.596 | Invention Example |
| 6 | 0.06 | 3.0 | 0.06 | S=0.003,Se=0.03,Cr=0.05,Nb=0.05, Sb=0.03,Bi=0.004 | 1.15 | ○ | 20 | 20.13 | 1.943 | 0.600 | Invention Example |
| 7 | 0.05 | 3.2 | 0.09 | N=0.004,A1=0.007,5=0.004,Se=0.002, Cr=0.05,Ni=0.04,Mo=0.03 | 1.17 | ○ | 20 | 20.48 | 1.942 | 0.599 | Invention Example |
| 8 | 0.07 | 3.4 | 0.10 | N=0.006,Al=0.02,S=0.003,Se=0.02, Mo=0.01,Bi=0.002 | 1.22 | ○ | 20 | 21.36 | 1.943 | 0.596 | Invention Example |
| 9 | 0.05 | 3.3 | 0.09 | N=0.003,A1=0.005,P=0.05,Cu=0.06, Sn=0.03,Sb=0.03 | 1.24 | ○ | 20 | 21.71 | 1.943 | 0.595 | Invention Example |
| 10 | 0.07 | 3.4 | 0.06 | N=0.009,Al=0.03,Se=0.01,P=0.01, Ti=0.001,Ni=0.04,Mo=0.03 | 1.22 | ○ | 20 | 21.36 | 1.941 | 0.596 | Invention Example |

| | | | | | | | | | | | |
|---|---|---|---|---|---|---|---|---|---|---|---|
| *: Based on visual observation, examples exhibiting uniformity were given ∘, examples exhibiting slight non-uniformity were given Δ, and examples exhibiting non-uniformity were given ×. | | | | | | | | | | | |

The results of the above evaluations are also shown in Table 3. As seen from Table 3, steel sheets meeting the composition requirements of the present invention exhibited favorable film properties and magnetic properties even when using steel materials with significantly different compositions.

## Claims

1. A grain-oriented electrical steel sheet having, on its surface that has been subjected to finishing annealing, an electrodeposited ceramic film consisting of any one of a carbide, nitride, and oxide of one or more metal elements selected from the group consisting of Mg, Al, Si, Ti, Cr, Zr, and Y, or an electrodeposited ceramic film consisting of a complex of two or more of said carbide, nitride, and oxide.

2. The grain-oriented electrical steel sheet according to claim 1, wherein
a tensile stress imparted to the steel sheet by the electrodeposited ceramic film is in the range from 5 to 40 MPa.

3. The grain-oriented electrical steel sheet according to claim 1 or 2, wherein
the steel sheet has no forsterite film.

4. The grain-oriented electrical steel sheet according to any one of claims 1 to 3, wherein
the steel sheet has a chemical composition containing 0.0050 mass% or less of C, 2.0 to 5.0 mass% of Si, and 0.01 to 0.5 mass% of Mn, with a balance consisting of Fe and unavoidable impurities.

5. The grain-oriented electrical steel sheet according to claim 4, wherein
the chemical composition further contains at least one selected from the group consisting of 0.0001 to 0.005 mass% of B, 0.005 to 0.1 mass% of P, 0.001 to 0.01 mass% of Ti, 0.01 to 0.5 mass% of Cr, 0.01 to 1.5 mass% of Ni, 0.01 to 0.5 mass% of Cu, 0.002 to 0.08 mass% of Nb, 0.005 to 0.1 mass% of Mo, 0.005 to 0.5 mass% of Sn, 0.005 to 0.5 mass% of Sb, and 0.001 to 0.05 mass% of Bi.

6. A method for producing a grain-oriented electrical steel sheet, comprising:
hot-rolling a steel material with a given chemical composition to obtain a hot-rolled steel sheet;
cold-rolling the hot-rolled steel sheet to obtain a cold-rolled steel sheet;
performing decarburization annealing doubling as primary recrystallization annealing on the cold-rolled steel sheet to obtain a decarburization-annealed steel sheet;
applying an annealing separator to the surface of the decarburization-annealed steel sheet;
performing finishing annealing on the decarburization-annealed steel sheet to obtain a finishing-annealed steel sheet; and
performing flattening annealing on the finishing-annealed steel sheet,
wherein an electrodeposited ceramic film is formed on the surface of the finishing-annealed steel sheet by electrodepositing thereon a ceramic material consisting of any one of a carbide, nitride, and oxide of one or more metal elements selected from the group consisting of Mg, Al, Si, Ti, Cr, Zr, and Y, or a ceramic material consisting of a complex of two or more of said carbide, nitride, and oxide.

7. The method for producing a grain-oriented electrical steel sheet according to claim 6, wherein
a tensile stress imparted to the steel sheet by the electrodeposited ceramic film is in the range from 5 to 40 MPa.

8. The method for producing a grain-oriented electrical steel sheet according to claim 6 or 7, wherein
the ceramic material is electrodeposited on a finishing-annealed steel sheet surface having no forsterite film.

9. The method for producing a grain-oriented electrical steel sheet according to any one of claims 6 to 8, wherein
the steel material has a chemical composition containing 0.01 to 0.1 mass% of C, 2.0 to 5.0 mass% of Si, 0.01 to 0.5 mass% of Mn, and at least one group of inhibitor-forming components selected from the following groups A and B, with a balance consisting of Fe and unavoidable impurities:
·group A: at least one selected from the group consisting of 0.005 to 0.03 mass% of S and 0.005 to 0.03 mass% of Se;
·group B: 0.010 to 0.04 mass% of Al and 0.005 to 0.01 mass% of N.

10. The method for producing a grain-oriented electrical steel sheet according to any one of claims 6 to 8, wherein
the steel material has a chemical composition containing 0.01 to 0.1 mass% of C, 2.0 to 5.0 mass% of Si, 0.01 to 0.5 mass% of Mn, less than 0.005 mass% of S, less than 0.005 mass% of Se, less than 0.010 mass% of Al, and less than 0.005 mass% of N, with a balance consisting of Fe and unavoidable impurities.

11. The method for producing a grain-oriented electrical steel sheet according to claim 9 or 10, wherein
the chemical composition of the steel material further contains at least one selected from the group consisting of 0.0001 to 0.005 mass% of B, 0.005 to 0.1 mass% of P, 0.001 to 0.01 mass% of Ti, 0.01 to 0.5 mass% of Cr, 0.01 to 1.5 mass% of Ni, 0.01 to 0.5 mass% of Cu, 0.002 to 0.08 mass% of Nb, 0.005 to 0.1 mass% of Mo, 0.005 to 0.5 mass% of Sn, 0.005 to 0.5 mass% of Sb, and 0.001 to 0.05 mass% of Bi.
